# EUROPEAN PATENT SPECIFICATION

(11) **EP 4 159 035 B1**
(45) Date of publication and mention of the grant of the patent: **02.04.2025**
(21) Application number: 20938312.4
(22) Date of filing: 20.08.2020
(51) Int. Cl.: A01K 73/02, A01K 73/04, B63H 5/14

(54) **LIFTING-DIVING SELF-POWERED ADJUSTING APPARATUS FOR EUPHAUSIA SUPERBA BEAM TRAWL**
SELBSTANGETRIEBENE HEBE- UND SCHNEIDEINSTELLVORRICHTUNG FÜR SCHLEPPNETZ MIT EUPHAUSIA SUPERBA-BALKEN
APPAREIL DE RÉGLAGE AUTONOME DE LEVAGE-PLONGÉE POUR CHALUT À PERCHE POUR EUPHAUSIA SUPERBA

(30) Priority: 27.05.2020 CN 202010460834
(43) Date of publication of application: 05.04.2023
(73) Proprietor: East China Sea Fishery Research Institute Chinese Academy of Fishery Sciences, Shanghai 200090 (CN)
(72) Inventor: WANG, Yongjin, Shanghai 200090 (CN); WANG, Lumin, Shanghai 200090 (CN); QI, Guangrui, Shanghai (CN); LIU, Yongli, Shanghai (CN)
(74) Representative: 2K Patentanwälte Blasberg Kewitz & Reichel
(86) International application number: PCT/CN2020/110200
(87) International publication number: WO 2021/237954

(56) References cited:
- WO-A1-2010/015254
- WO-A1-2010/019049
- WO-A1-2017/222390
- CN-A- 107 372 384
- CN-A- 111 528 186
- CN-Y- 2 819 792
- GB-A- 811 853
- JP-A- 2000 217 465
- KR-A- 20140 064 283
- NO-B1- 329 801
- US-A- 4 574 723

## Description

### TECHNICAL FIELD

The present invention relates to the technical field of beam trawls, and particularly relates to a self-energized rising-diving adjusting device for a euphausia superba beam trawl.

### BACKGROUND

In a situation of an existing beam trawl for euphausia superba fishing, the trawl is loaded by a beam, the beam is connected to a fishing vessel pulling system through a pulling rope, and a fishing vessel sails to pull the beam trawl to achieve sweeping fishing. A water level depth of the existing beam trawl can only be controlled by controlling a length of the pulling rope and a sailing speed of the fishing vessel, and an active rising-diving adjustment function cannot be realized.

WO 2010/019049 A1 discloses a self-energized rising-diving adjusting device comprising rising-diving adjusting apparatuses each comprising a fairing, a protective cover, a propeller water flow generator installed inside the fairing, a bidirectional driving motor powered by the propeller water flow generator, a rotary screw, a lifting and lowering connector and a fin, wherein two ends of the rotary screw are installed on the protective cover in a vertical direction, the rotary screw is driven by the bidirectional driving motor to rotate, and the lifting and lowering connector is assembled on the rotary screw through a thread structure.

### SUMMARY

A technical problem to be solved by the present invention is to provide a self-energized rising-diving adjusting device for a euphausia superba beam trawl, so as to realize controllable and self-energized active rising-diving adjustment of the beam trawl.

A technical solution used by the present invention to solve the technical problem is defined in claim 1 and provides a self-energized rising-diving adjusting device for a euphausia superba beam trawl, including rising-diving adjusting apparatuses symmetrically installed on a beam.

The rising-diving adjusting apparatuses include a fairing, a protective cover, a propeller water flow generator, a bidirectional driving motor, a rotary screw, a lifting and lowering connector and a fin. The protective cover is connected with a rear end of the fairing, the propeller water flow generator is installed inside the fairing, the bidirectional driving motor is powered by the propeller water flow generator, two ends of the rotary screw are installed on the protective cover in a vertical direction in a mode of rotating bidirectionally, the rotary screw is driven by the bidirectional driving motor to rotate, the lifting and lowering connector is assembled on the rotary screw through a thread structure, a front end of the fin is horizontal and both sides of the fin are rotationally connected with the protective cover respectively, and a rear end of the fin is connected with the lifting and lowering connector and is driven to adjust an angle of the fin through lifting and lowering movement of the lifting and lowering connector.

Operation of the bidirectional driving motor is controlled by a control system arranged on a fishing vessel, a water depth monitoring sensor is installed on the beam, and the water depth monitoring sensor is connected to the control system.

The lifting and lowering connector includes a swivel nut part and a fin connecting part, the lifting and lowering connector sleeves the rotary screw through the swivel nut part, and the rear end of the fin is connected with the fin connecting part in a floating mode.

A connecting shaft is arranged on the fin connecting part, a kidney-shaped hole is formed in the rear end of the fin in a front-back direction, and the fin sleeves the connecting shaft of the fin connecting part through the kidney-shaped hole.

Two ends of the rotary screw are installed on the protective cover in a rotatable mode through bearing structures respectively.

A bevel gear is arranged on the rotary screw, a bevel gear is arranged on an output rotating shaft of the bidirectional driving motor, and transmission is achieved between the bidirectional driving motor and the rotary screw through the meshed bevel gear pair.

Rotating shafts are arranged respectively on two sides of the front end of the fin, and the rotating shafts are installed on the protective cover in a rotatable mode through bearing structures.

The rising-diving adjusting apparatuses are respectively installed at two ends of the beam.

Connecting flanges are respectively arranged at the two ends of the beam, a connecting flange is arranged on an outer side of the fairing, and the rising-diving adjusting apparatuses are installed at the two ends of the beam in a butt joint mode through the connecting flanges.

### Beneficial effects

First, according to the present invention, the rotary screw can be driven to rotate bidirectionally through the bidirectional driving motor, and the rear end of the fin can be driven to ascend or descend through the lifting and lowering connector, so the angle of the fin can be adjusted. Therefore, a direction of acting force between the fin and a water flow in a process of moving in a water body can be changed, and an effect of actively controlling the beam trawl to rise or dive is achieved.

Second, according to the present invention, a water depth of the trawl can be detected in real time, and therefore the angle of the fin can be adjusted in real time. The water depth of the beam trawl is adjusted in real time based on a balance between the fin and a beam trawl pulling rope, and tracking, aiming and fishing of euphausia superba can be realized by the beam trawl through adjustment of the water depth of the beam trawl.

Third, according to the present invention, when the propeller water flow generator moves in the water body, a propeller rotates under impact of the water flow to generate electricity, so as to supply power to operation of the device of the present invention, thereby realizing self-energizing and facilitating long-term underwater fishing of the beam trawl.

### BRIEF DESCRIPTION OF THE DRAWINGS

Fig. 1 is a schematic structural diagram of rising-diving adjusting apparatuses installed at two ends of a beam of an embodiment of the present invention;
Fig. 2 is a schematic diagram of an external structure of a rising-diving adjusting apparatus of an embodiment of the present invention;
Fig. 3 is a schematic diagram of an internal structure of a rising-diving adjusting apparatus of an embodiment of the present invention; and
Fig. 4 is a schematic structural diagram of pre-sleeving a fin and a lifting and lowering connector on a rotary screw of an embodiment of the present invention.

### DETAILED DESCRIPTION

The present invention will be further described below in combination with specific embodiments. It should be understood that these embodiments are merely used for describing the present invention, rather than limiting the scope of the present invention. It should be further understood that, after reading content described in the present invention, those of skill in the art may make various changes or modifications to the present invention, within the scope limited by the claims of the present invention.

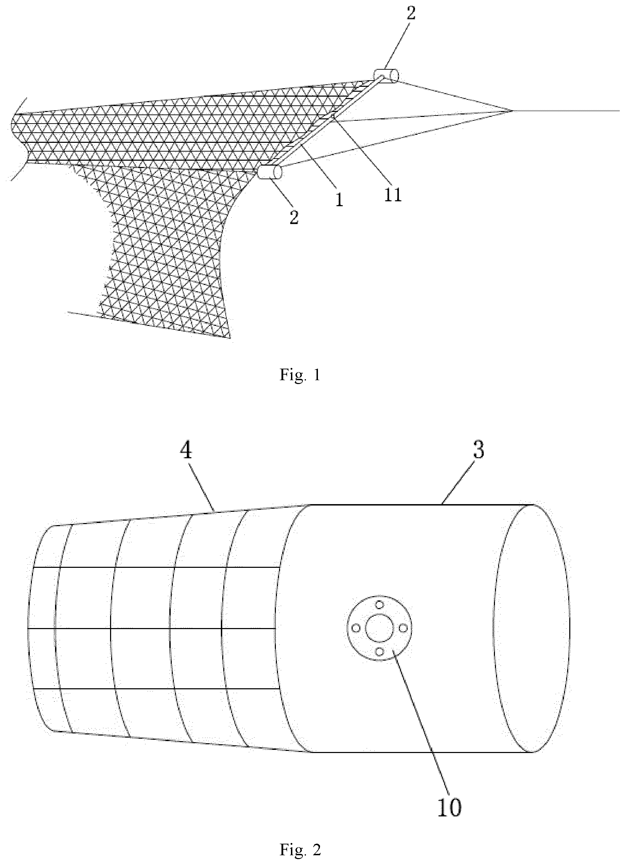

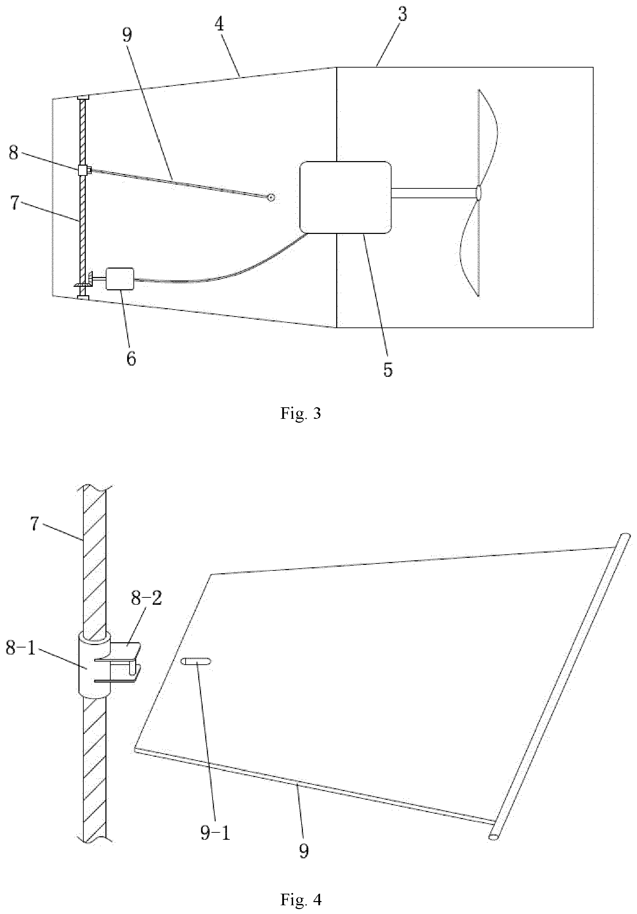

A self-energized rising-diving adjusting device for a euphausia superba beam trawl shown in Fig. 1 includes rising-diving adjusting apparatuses 2 symmetrically installed at two ends of a beam 1. As shown in Fig. 2 and Fig. 3, the rising-diving adjusting apparatuses 2 include a fairing 3, a protective cover 4, a propeller water flow generator 5, a bidirectional driving motor 6, a rotary screw 7, a lifting and lowering connector 8 and a fin 9. Connecting flanges 10 are respectively arranged at the two ends of the beam 1, a connecting flange 10 is arranged on an outer side of the fairing 3, and the rising-diving adjusting apparatuses 2 are installed at the two ends of the beam 1 in a butt joint mode through the connecting flanges 10.

As shown in Fig. 3, the protective cover 4 is connected to a rear end of the fairing 3, and the protective cover 4 is in a circular truncated cone shape as a whole. The propeller water flow generator 5 is installed inside the fairing 3, a propeller is towards a direction of an incident flow, the propeller water flow generator 5 is an existing product being directly applied, and an electric power storage module is loaded therein. When the beam trawl is pulled to move in a water body, the propeller of the propeller water flow generator 5 rotates under impact of a water flow to generate electricity, electric power can be stored by the electric power storage module, and power is provided for operation of the bidirectional driving motor 6 through self-energizing, thereby facilitating long-term underwater fishing of the beam trawl.

The rotary screw 7 is arranged inside the protective cover 4 in a vertical direction, and two ends of the rotary screw 7 are installed on the protective cover 4 in a mode of rotating bidirectionally respectively through bearing structures. A bevel gear is arranged on the rotary screw 7, a bevel gear is arranged on an output rotating shaft of the bidirectional driving motor 6, and transmission is achieved between the bidirectional driving motor 6 and the rotary screw 7 through the meshed bevel gear pair. By driving of the bidirectional driving motor 6, the rotary screw 7 can be controlled to rotate in a forward or reverse direction according to requirements.

As shown in Fig. 4, the lifting and lowering connector 8 includes a swivel nut part 8-1 and a fin connecting part 8-2, and the lifting and lowering connector 8 sleeves the rotary screw 7 through the swivel nut part 8-1. The front end of the fin 9 is horizontal, rotating shafts are arranged respectively on two sides of the front end of the fin 9, and the rotating shafts are installed on the protective cover 4 in a rotatable mode through bearing structures. As shown in Fig. 4, a connecting shaft is arranged on the fin connecting part 8-2, a kidney-shaped hole 9-1 is formed in the rear end of the fin 9 in a front-back direction, the fin 9 sleeves the connecting shaft of the fin connecting part 8-2 through the kidney-shaped hole 9-1, and therefore floating connection is realized between the rear end of the fin 9 and the fin connecting part 8-2, which can achieve an effect of making positional compensation for change of the angle of the fin 9. When the lifting and lowering connector 8 is located at an original position on the rotary screw 7, the fin 9 is horizontal as a whole; and when the rotary screw 7 is driven to rotate in the forward or reverse direction, the lifting and lowering connector 8 moves upwards or downwards, and the rear end of the fin 9 is driven to ascend or descend accordingly, thereby adjusting the angle of the fin 9. Therefore, a direction of acting force between the fin 9 and a water flow in the process of moving in the water body can be changed, and an effect of actively controlling the beam trawl to rise or dive is achieved.

Operation of the bidirectional driving motor 6 is controlled by a control system arranged on a fishing vessel, a water depth monitoring sensor 11 is installed on the beam 1, and the water depth monitoring sensor 11 is connected to the control system. By detecting a water depth of the trawl in real time, the angle of the fin 9 is adjusted in real time, and the water depth of the beam trawl is adjusted in real time based on a balance between the fin 9 and a beam trawl pulling rope. Adjustment of the water depth of the beam trawl is controlled in combination with analysis of a core section (aqueous layer) of euphausia superba population density, and tracking, aiming and fishing of euphausia superba can be realized by the beam trawl.

## Claims

1. A self-energized rising-diving adjusting device for a euphausia superba beam trawl, comprising: rising-diving adjusting apparatuses (2) symmetrically installed on a beam (1), wherein the rising-diving adjusting apparatuses (2) each comprise a fairing (3), a protective cover (4), a propeller water flow generator (5), a bidirectional driving motor (6), a rotary screw (7), a lifting and lowering connector (8) and a fin (9), the protective cover (4) is connected with a rear end of the fairing (3), the propeller water flow generator (5) is installed inside the fairing (3), the bidirectional driving motor (6) is powered by the propeller water flow generator (5), two ends of the rotary screw (7) are installed on the protective cover (4) in a vertical direction in a mode of rotating bidirectionally, the rotary screw (7) is driven by the bidirectional driving motor (6) to rotate, the lifting and lowering connector (8) is assembled on the rotary screw (7) through a thread structure, **characterized in that** a front end of the fin (9) is horizontal and both sides of the fin (9) are rotationally connected with the protective cover (4) respectively, and a rear end of the fin (9) is connected with the lifting and lowering connector (8) and is driven to adjust an angle of the fin (9) through lifting and lowering movement of the lifting and lowering connector (8).

2. The self-energized rising-diving adjusting device for the euphausia superba beam trawl of claim 1, **characterized in that** operation of the bidirectional driving motor (6) is controlled by a control system arranged on a fishing vessel, a water depth monitoring sensor (11) is installed on the beam (1), and the water depth monitoring sensor (11) is connected to the control system.

3. The self-energized rising-diving adjusting device for the euphausia superba beam trawl of claim 1, **characterized in that** the lifting and lowering connector (8) comprises a swivel nut part (8-1) and a fin connecting part (8-2), the lifting and lowering connector (8) sleeves the rotary screw (7) through the swivel nut part (8-1), and the rear end of the fin (9) is connected with the fin connecting part (8-2) in a floating mode.

4. The self-energized rising-diving adjusting device for the euphausia superba beam trawl of claim 3, **characterized in that** a connecting shaft is arranged on the fin connecting part (8-2), a kidney-shaped hole (9-1) is formed in the rear end of the fin (9) in a front-back direction, and the fin (9) sleeves the connecting shaft of the fin connecting part (8-2) through the kidney-shaped hole (9-1).

5. The self-energized rising-diving adjusting device for the euphausia superba beam trawl of claim 1, **characterized in that** the two ends of the rotary screw (7) are installed on the protective cover (4) in a rotatable mode through bearing structures respectively.

6. The self-energized rising-diving adjusting device for the euphausia superba beam trawl of claim 1, **characterized in that** a bevel gear is arranged on the rotary screw (7), a bevel gear is arranged on an output rotating shaft of the bidirectional driving motor (6), and transmission is achieved between the bidirectional driving motor (6) and the rotary screw (7) through the meshed bevel gear pair.

7. The self-energized rising-diving adjusting device for the euphausia superba beam trawl of claim 1, **characterized in that** rotating shafts are arranged respectively on two sides of the front end of the fin (9), and the rotating shafts are installed on the protective cover (4) in a rotatable mode through bearing structures.

8. The self-energized rising-diving adjusting device for the euphausia superba beam trawl of claim 1, **characterized in that** the rising-diving adjusting apparatuses (2) are respectively installed at two ends of the beam (1).

9. The self-energized rising-diving adjusting device for the euphausia superba beam trawl of claim 8, **characterized in that** connecting flanges (10) are respectively arranged at the two ends of the beam (1), a connecting flange (10) is arranged on an outer side of the fairing (3), and the rising-diving adjusting apparatuses (2) are installed at the two ends of the beam (1) in a butt joint mode through the connecting flanges (10).

## Patentansprüche

1. Selbstenergetisiertes Steig-/Sink-Einstellgerät für eine Euphausia-Superba-Baumkurre, umfassend: Steig-/Sink-Einstellvorrichtungen (2), die jeweils symmetrisch an einem Baum (1) angebracht sind, wobei die Steig-/Sink-Einstellvorrichtungen (2) jeweils eine Verkleidung (3), eine Schutzabdeckung (4), einen Propeller-Wasserströmungsgenerator (5), einen bidirektionalen Antriebsmotor (6), eine Drehschraube (7), einen Hebe- und Senkverbinder (8) und eine Flosse (9) umfassen, wobei die Schutzabdeckung (4) mit einem hinteren Ende der Verkleidung (3) verbunden ist, der Propeller-Wasserströmungsgenerator (5) im Inneren der Verkleidung (3) installiert ist, der bidirektionale Antriebsmotor (6) von dem Propeller-Wasserströmungsgenerator (5) angetrieben wird, zwei Enden der Drehschraube (7) an der Schutzabdeckung (4) in einer vertikalen Richtung in einem Modus der bidirektionalen Drehung installiert sind, die Drehschraube (7) durch den bidirektionalen Antriebsmotor (6) angetrieben wird, um sich zu drehen, der Hebe- und Senkverbinder (8) an der Drehschraube (7) durch eine Gewindestruktur montiert ist, **dadurch gekennzeichnet, dass** ein vorderes Ende der Flosse (9) horizontal ist und beide Seiten der Flosse (9) jeweils drehbar mit der Schutzabdeckung (4) verbunden sind, und ein hinteres Ende der Flosse (9) mit dem Hebe- und Senkverbinder (8) verbunden ist und angetrieben wird, um einen Winkel der Flosse (9) durch eine Hebe- und Senkbewegung des Hebe- und Senkverbinders (8) einzustellen.

2. Selbstenergetisiertes Steig-/Sink-Einstellgerät für eine Euphausia-Superba-Baumkurre nach Anspruch 1, **dadurch gekennzeichnet, dass** der Betrieb des bidirektionalen Antriebsmotors (6) durch ein auf einem Fischereifahrzeug angeordnetes Steuersystem gesteuert wird, ein Wassertiefenüberwachungssensor (11) auf dem Baum (1) installiert ist und der Wassertiefenüberwachungssensor (11) mit dem Steuersystem verbunden ist.

3. Selbstenergetisiertes Steig-/Sink-Einstellgerät für eine Euphausia-Superba-Baumkurre nach Anspruch 1, **dadurch gekennzeichnet, dass** der Hebe- und Senkverbinder (8) ein Drehmutterteil (8-1) und ein Flossenverbindungsteil (8-2) umfasst, wobei der Hebe- und Senkverbinder (8) die Drehschraube (7) durch das Drehmutterteil (8-1) ummantelt und das hintere Ende der Flosse (9) mit dem Flossenverbindungsteil (8-2) in einem schwimmenden Modus verbunden ist.

4. Selbstenergetisiertes Steig-/Sink-Einstellgerät für eine Euphausia-Superba-Baumkurre nach Anspruch 3, **dadurch gekennzeichnet, dass** eine Verbindungswelle auf dem Flossenverbindungsteil (8-2) angeordnet ist, ein nierenförmiges Loch (9-1) im hinteren Ende der Flosse (9) in einer Vorwärts-Rückwärts-Richtung ausgebildet ist, und die Flosse (9) die Verbindungswelle des Flossenverbindungsteils (8-2) durch das nierenförmige Loch (9-1) ummantelt.

5. Selbstenergetisiertes Steig-/Sink-Einstellgerät für eine Euphausia-Superba-Baumkurre nach Anspruch 1, **dadurch gekennzeichnet, dass** die beiden Enden der Drehschraube (7) jeweils durch Lagerstrukturen drehbar an der Schutzabdeckung (4) angebracht sind.

6. Selbstenergetisiertes Steig-/Sink-Einstellgerät für eine Euphausia-Superba-Baumkurre nach Anspruch 1, **dadurch gekennzeichnet, dass** ein Kegelrad an der Drehschraube (7) angeordnet ist und ein Kegelrad an einer Ausgangsdrehwelle des bidirektionalen Antriebsmotors (6) angeordnet ist und die Übertragung zwischen dem bidirektionalen Antriebsmotor (6) und der Drehschraube (7) über das ineinandergreifende Kegelradpaar erfolgt.

7. Selbstenergetisiertes Steig-/Sink-Einstellgerät für eine Euphausia-Superba-Baumkurre nach Anspruch 1, **dadurch gekennzeichnet, dass** Drehwelle jeweils an zwei Seiten des vorderen Endes der Flosse (9) angeordnet sind und die Drehwelle durch Lagerstrukturen drehbar an der Schutzabdeckung (4) angebracht sind.

8. Selbstenergetisiertes Steig-/Sink-Einstellgerät für eine Euphausia-Superba-Baumkurre nach Anspruch 1, **dadurch gekennzeichnet, dass** die Steig-/Sink-Einstellvorrichtungen (2) jeweils an zwei Enden des Baums (1) angebracht sind.

9. Selbstenergetisiertes Steig-/Sink-Einstellgerät für eine Euphausia-Superba-Baumkurre nach Anspruch 8, **dadurch gekennzeichnet, dass** an den beiden Enden des Baumes (1) jeweils Verbindungsflansche (10) angeordnet sind, ein Verbindungsflansch (10) an einer Außenseite der Verkleidung (3) angeordnet ist und die Steig-/Sink-Einstellvorrichtungen (2) durch die Verbindungsflansche (10) an den beiden Enden des Baumes (1) angedockt installiert sind.

## Revendications

1. Dispositif de réglage de montée-plongée auto-alimenté pour un chalut à poutre pour euphausia superba, comprenant : des moyens de réglage de montée-plongée (2) installés symétriquement sur une poutre (1), dans lequel les moyens de réglage de montée-plongée (2) comprennent chacun un carénage (3), un couvercle de protection (4), un générateur de flux d'eau d'hélice (5), un moteur d'entraînement bidirectionnel (6), une vis rotative (7), un connecteur de levage et d'abaissement (8) et une ailette (9), le couvercle de protection (4) est relié à une extrémité arrière du carénage (3), le générateur de flux d'eau d'hélice (5) est installé à l'intérieur du carénage (3), le moteur d'entraînement bidirectionnel (6) est alimenté par le générateur de flux d'eau d'hélice (5), deux extrémités de la vis rotative (7) sont installées sur le couvercle de protection (4) dans une direction verticale en mode de rotation bidirectionnelle, la vis rotative (7) est entraînée par le moteur d'entraînement bidirectionnel (6) à tourner, et le connecteur de levage et d'abaissement (8) est assemblé sur la vis rotative (7) par l'intermédiaire d'une structure filetée, **caractérisé en ce qu'**une extrémité avant de l'ailette (9) est horizontale et deux côtés de l'ailette (9) sont reliés de manière rotative au couvercle de protection (4) respectivement, et une extrémité arrière de l'ailette (9) est reliée au connecteur de levage et d'abaissement (8) et est entraînée à ajuster un angle de l'ailette (9) par un mouvement de levage et d'abaissement du connecteur de levage et d'abaissement (8).

2. Dispositif de réglage de montée-plongée auto-alimenté pour un chalut à poutre pour euphausia superba selon la revendication 1, **caractérisé en ce que** le fonctionnement du moteur d'entraînement bidirectionnel (6) est commandé par un système de commande disposé sur un navire de pêche, un capteur de surveillance de la profondeur de l'eau (11) est installé sur la poutre (1) et le capteur de surveillance de la profondeur de l'eau (11) est connecté au système de commande.

3. Dispositif de réglage de montée-plongée auto-alimenté pour un chalut à poutre pour euphausia superba selon la revendication 1, **caractérisé en ce que** le connecteur de levage et d'abaissement (8) comprend une partie d'écrou pivotant (8-1) et une partie de connexion d'ailette (8-2), le connecteur de levage et d'abaissement (8) gaine la vis rotative (7) à travers la partie d'écrou pivotant (8-1), et l'extrémité arrière de l'ailette (9) est reliée à la partie de connexion d'ailette (8-2) en mode de flottement.

4. Dispositif de réglage de montée-plongée auto-alimenté pour un chalut à poutre pour euphausia superba selon la revendication 3, **caractérisé en ce qu'**un arbre de liaison est disposé sur la partie de connexion d'ailette (8-2), un trou en forme de rein (9-1) est formé à l'extrémité arrière de l'ailette (9) dans une direction avant-arrière, et l'ailette (9) gaine l'arbre de liaison de la partie de connexion d'ailette (8-2) à travers le trou en forme de rein (9-1).

5. Dispositif de réglage de montée-plongée auto-alimenté pour un chalut à poutre pour euphausia superba selon la revendication 1, **caractérisé en ce que** les deux extrémités de la vis rotative (7) sont installées sur le couvercle de protection (4) en mode rotatif à travers des structures porteuses respectivement.

6. Dispositif de réglage de montée-plongée auto-alimenté pour un chalut à poutre pour euphausia superba selon la revendication 1, **caractérisé en ce qu'**un engrenage conique est disposé sur la vis rotative (7), un engrenage conique est disposé sur un arbre rotatif de sortie du moteur d'entraînement bidirectionnel (6), et une transmission est réalisée entre le moteur d'entraînement bidirectionnel (6) et la vis rotative (7) à travers une paire d'engrenages coniques engrenés.

7. Dispositif de réglage de montée-plongée auto-alimenté pour un chalut à poutre pour euphausia superba selon la revendication 1, **caractérisé en ce que** des arbres rotatifs sont disposés respectivement sur deux côtés de l'extrémité avant de l'ailette (9), et les arbres rotatifs sont installés sur le couvercle de protection (4) en mode rotatif à travers des structures porteuses.

8. Dispositif de réglage de montée-plongée auto-alimenté pour un chalut à poutre pour euphausia superba selon la revendication 1, **caractérisé en ce que** les moyens de réglage de montée-plongée (2) sont respectivement installés à deux extrémités de la poutre (1).

9. Dispositif de réglage de montée-plongée auto-alimenté pour un chalut à poutre pour euphausia superba selon la revendication 8, **caractérisé en ce que** des brides de liaison (10) sont disposées respectivement aux deux extrémités de la poutre (1), une bride de liaison (10) est disposée sur un côté extérieur du carénage (3), et les moyens de réglage de montée-plongée (2) sont installés aux deux extrémités de la poutre (1) en mode d'assemblage bout à bout à travers les brides de liaison (10).
